# EUROPEAN PATENT APPLICATION

(11) **EP 2 713 370 A1**
(43) Date of publication of application: **02.04.2014**
(21) Application number: 13163632.6
(22) Date of filing: 12.04.2013
(51) Int. Cl.: G11B 27/11, G11B 27/034, G06F 17/30

(54) **Information processing apparatus and information processing method**

(30) Priority: 26.09.2012 JP 2012213086
(71) Applicant: Kabushiki Kaisha Toshiba, Tokyo 105-8001 (JP)
(72) Inventor: Tateno, Tsuyoshi, Tokyo, 105-8001 (JP)
(74) Representative: Henkel, Breuer & Partner

(57) **Abstract**

An information processing apparatus includes a signal output module, a commanding module, a cutting-out module, a transmitting module and a storage module. The signal output module is configured to output an audio signal. The commanding module is configured to command a search for song name information relating to the audio signal, as a search commanding according to an external manipulation. The cutting-out module is configured to cut out part of the audio signal as a search section that includes or is close to timing of the search commanding and to remove a silent portion from the search section. The transmitting module is configured to send information of the cut-out part of the audio signal in the search section without the silent portion to a server. The storage module is configured to receive a song name information search result for the search section from the server and to store the received search result.

## Description

### FIELD

The present invention relates to an information processing apparatus and an information processing method for analyzing a music playing state of a stored content using a song name search function.

### BACKGROUND

Techniques for increasing the accuracy of extraction of a musical piece from pieces of broadcast information have been developed recently (refer to JP-A-2006-039985, for example). However, these prior art techniques are such as to detect a song section by analyze audio data all the time. Although a technique capable of detecting a song section in a simpler manner is desired, no such means is known yet.

### BRIEF DESCRIPTION OF THE DRAWINGS

Fig. 1 outlines a system according to an embodiment of the present invention.
Fig. 2 shows the configuration of an audio processing apparatus according to the embodiment.
Fig. 3 shows a functional module configuration for a song name search process according to the embodiment.
Fig. 4 is a flowchart of the song name search process according to the embodiment.
Fig. 5 is a flowchart of an audio stream analyzing process according to the embodiment.
Fig. 6 is a flowchart of search target section determining process according to the embodiment including an audio data cutting-out process which is executed at the time of detection of a silent portion(s).
Figs. 7A-7C illustrate search positions in an audio stream, a case in which silent portions are detected in the audio stream, and how a search result comparison target section is set, respectively, in the embodiment.
Fig. 8 illustrates how a search target section is divided in the embodiment when a silent portion(s) is detected.
Fig. 9 shows an example search result which is displayed on the display screen of a display module used in the embodiment.

### DETAILED DESCRIPTION

According to one embodiment, an information processing apparatus includes a signal output module, a commanding module, a cutting-out module, a transmitting module and a storage module. The signal output module is configured to output an audio signal. The commanding module is configured to command a search for song name information relating to the audio signal as a search commanding according to an external manipulation. The cutting-out module is configured to cut out part of the audio signal as a search section that includes or is close to timing of the search commanding and to remove a silent portion from the search section. The transmitting module is configured to send information of the cut-out part of the audio signal in the search section without the silent portion to a server. The storage module is configured to receive a song name information search result for the search section from the server and to store the received search result.

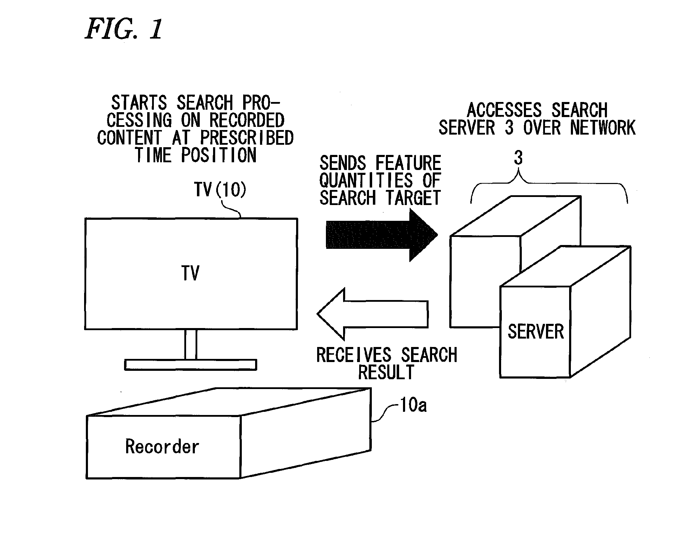

, An embodiment of the present invention will be hereinafter described with reference to Figs. 1-9. Fig. 1 outlines a system according to the embodiment, which is centered by an information processing apparatus (digital TV recording/reproducing apparatus 10 (descried below in detail) or recorder 10a) and also includes, for example, a remote controller (not shown) for the information processing apparatus and external servers 3. A user of the information processing apparatus issues, using the remote controller, an instruction to search for the name of a song the user is listening to. Feature quantities of the song are sent to a server 3 from the information processing apparatus. The information processing apparatus receives a song name etc. which are a result of a search that has been made on the basis of the feature quantities, and displays the received song name etc. if necessary.

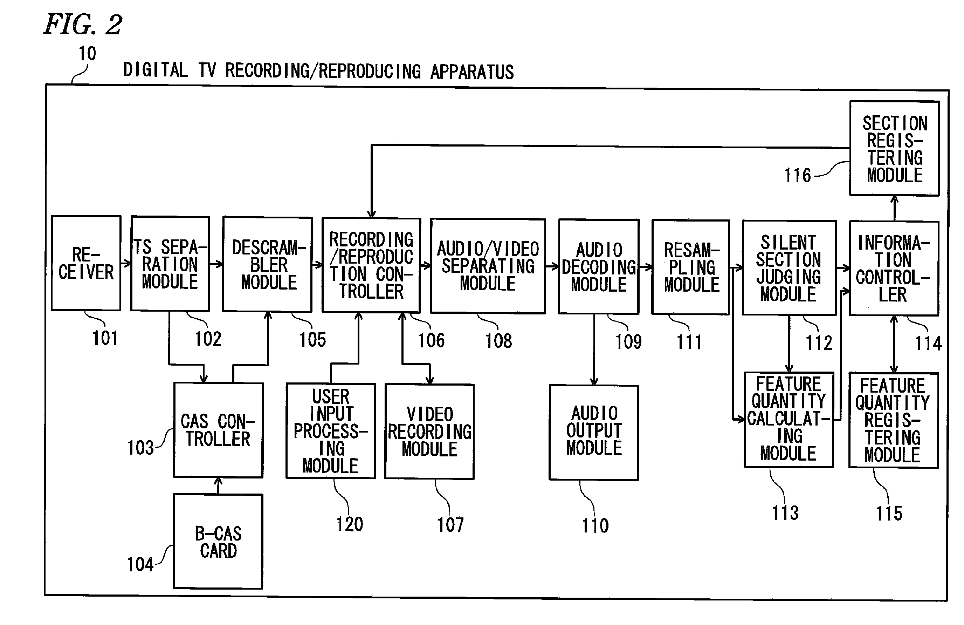

Next, the system configuration of an audio processing apparatus, more specifically, a digital TV recording/reproducing apparatus 10, which is an example information processing apparatus will be described with reference to Fig. 2. The digital TV recording/reproducing apparatus 10 can detect silent sections that exist in a TV broadcast program and last several hundreds of milliseconds, for example.

The digital TV recording/reproducing apparatus 10 is equipped with a receiver 101, a TS separation module 102, a CAS controller 103, a B-CAS card 104, a descrambler module 105, a recording/reproduction controller 106, a video recording module 107, an audio/video separating module 108, an audio decoding module 109, an audio output module 110 (a signal output module), a resampling module 111, a silent section judging module 112, a feature quantity calculating module 113, an information controller 114, a feature quantity registering module 115, a section registering module 116, a user input processing module 120 (which exchanges a data signal with the remote controller), and a display module (not shown) such as a monitor.

The receiver 101, which is connected to a TV broadcast wave reception antenna (not shown), receives a TV broadcast signal. When a signal of TV broadcast waves received antenna is input to the receiving module 101, the receiving module 101 demodulates it and outputs a resulting signal to the TS separation module 102.

The TS separation module 102 separates a transport stream (TS) of the broadcast signal that is input from the receiver 101 into elementary streams (ESs) such as coded audio data and video data and an ECM (entitlement control message) which is encrypted information, etc. The TS separation module 102 outputs the elementary streams to the descrambler module 105 and outputs the ECM to the CAS controller 103.

The CAS controller103 receives the ECM (encrypted information) from the TS separation module 102. The CAS controller 103 decrypts the ECM using a work key (Kw) which is set for each broadcasting company and stored in the B-CAS card 104, and compares attribute information relating the program which is contained in the ECM with contract information stored in the B-CAS card 104 to judge whether to permit viewing. If viewing should be permitted, the CAS controller 103 decrypts a scrambling key (Ks) and outputs it to the descrambler module 105.

The descrambler module 105 descrambles the elementary streams (audio data and video data) which are input from the TS separation module 102 using the scrambling key (Ks) which is input from the CAS controller 103, and outputs descrambled audio data and video data to the recording/reproduction controller 106.

The recording/reproduction controller 106 controls recording processing and reproduction processing. In recording processing, the recording/reproduction controller 106 combines audio data and video data of each content into a single transport stream and outputs transport streams of contents to the audio/video separating module 108. In the recording processing, the recording/reproduction controller 106 can record a moving image content, for example, in the video recording module 107 in such a manner that it is correlated with sectioning information which is input from the section registering module 116 (described later). The recording/reproduction controller 106 can also cut out a portion, in a particular time section, of a moving image content, for example, and record the cut-out portion in the video recording module 107 according to sectioning information which is input from the section registering module 116.

Furthermore, the recording/reproduction controller 106 controls reproduction processing of a content which is recorded in the video recording module 107. That is, the recording/reproduction controller 106 loads a transport stream of the content into itself from the video recording module 107 and outputs the transport stream to the audio/video separating module 108.

The audio/video separating module 108 separates the transport stream that is input from the recording/reproduction controller 106 into an audio signal and a video signal, and outputs the separated audio signal and video signal to the audio decoding module 109 and a video decoding module (not shown), respectively.

The audio decoding module 109 decodes the audio signal that is input from the audio/video separating module 108, into a signal having a PCM format, for example. The audio decoding module 109 outputs a decoded audio signal to the resampling module 111 in the case of recording processing, and outputs a decoded audio signal to the audio output module 110 in the case of reproduction processing.

The resampling module 111 performs resampling processing of converting the sampling frequency of the audio signal that is input from the audio decoding module 109. In digital broadcasting, the sampling frequency of an audio signal is 48 kHz, for example. The resampling module 111 resamples the audio signal at a lower frequency and thereby converts it into an audio having a sampling frequency 12 kHz, for example.

The resampling module 111 performs the resampling processing after performing processing of eliminating audio components whose frequencies are higher than a prescribed frequency from audio samples to be subjected to the resampling processing. The resampling processing may be performed by a known method. The resampling module 111 outputs the resampled audio signal to the silent section judging module 112 and the feature quantity calculating module 113.

The silent section judging module 112 judges, for each of ones having a prescribed interval among the audio samples of the received audio signal, whether or not its volume level is within a prescribed range, and detects, as a silent section, a section in which the volume level is judged within the prescribed range a prescribed number of times consecutively. If detecting a silent section, the silent section judging module 112 notifies the feature quantity calculating module 113 and the information controller 114 of the detection of the silent section. The information controller 114 includes functions of transmission of information indicating a silent section and feature quantities and exchange of transmission/reception data with the external servers 3 wirelessly or via a LAN interface.

After receiving the silent section detection notice from the silent section judging module 112, the feature quantity calculating module 113 calculates feature quantities of the consecutive, prescribed number of audio samples among the audio samples of the audio signal. The feature quantity calculating module 113 calculates feature quantities after a lapse of a prescribed time (e.g., 1 sec) from the reception of the silent section detection notice. In general, the feature quantity calculating module 113 is an application program capable of extracting, from audio samples, feature quantities that allow an external server 3 to perform a song information search.

The purpose of the feature quantity calculating module 113 is to calculate feature quantities of musical signal samples in a section of an audio signal. The feature quantity calculating module 113 outputs data of calculated feature quantities to the information controller 114 to have them registered in the feature quantity registering module 115 until their transmission to an external server 3. This allows the information controller 114 which functions as a data communication module to send necessary feature quantities to an external server 3 for song information search via a communication network and an external router or modem that is connected to the digital TV recording/reproducing apparatus 10 by a wired network of the Ethernet (registered trademark) standard.

The information controller 114 registers a target section of the audio signal in the section registering module 116 on the basis of the silent section detection notice that is input from the silent section judging module 112.

The embodiment has an object of performing a song name search on an audio stream of a recorded content and thereby analyzing a music playing state of the audio stream. When a user issues a search instruction with such timing that the user wants to make a search for a musical piece, the digital TV recording/reproducing apparatus 10 cuts out search target audio data (PCM data), as a search section that includes or is close to the timing of the search commanding. And, the digital TV recording/reproducing apparatus 10 generates feature quantities that are necessary for the search. The generated feature quantities are sent to an external server 3 and a search result is returned to the digital TV recording/reproducing apparatus 10 upon completion of the search.

### <Module configuration and process flow>

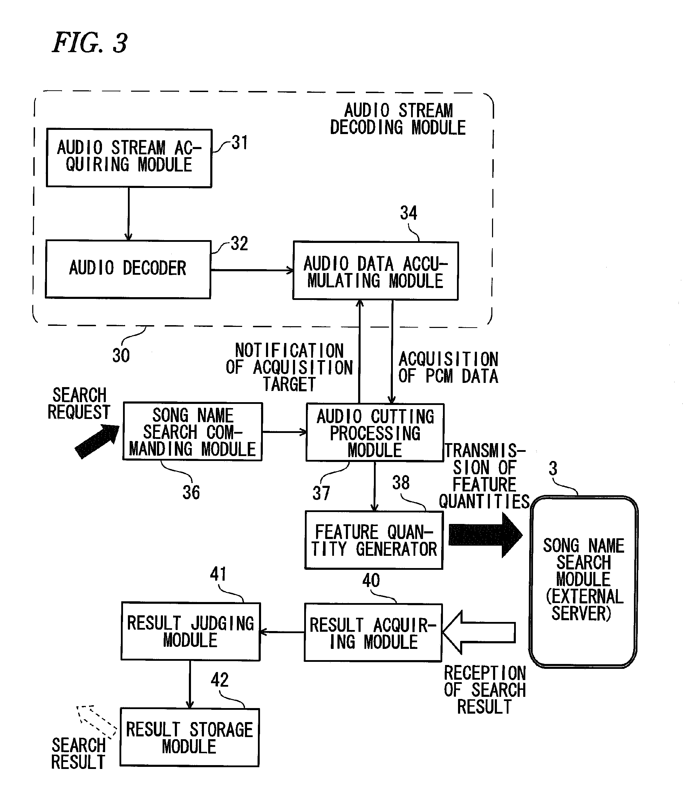

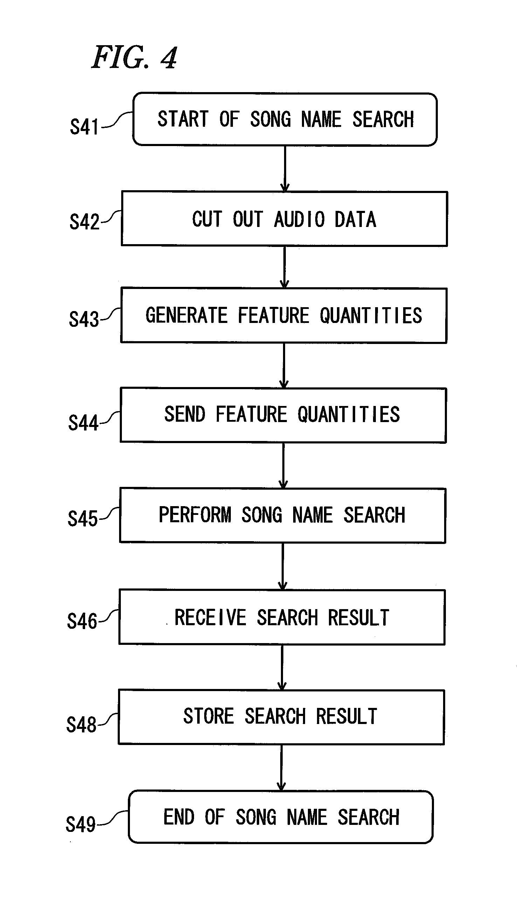

Fig. 3 shows an example functional module configuration for a song name search process which is executed by the digital TV recording/reproducing apparatus 10, and Fig. 4 shows a corresponding flowchart.

The module configuration includes an audio stream decoding module 30 which consists of an audio stream acquiring module 31, an audio decoder 32, and an audio data accumulating module 34 as well as a remote controller (not shown).

The module configuration also includes a song name search commanding module 36, an audio cutting processing module 37, a feature quantity generator 38, a result acquiring module 40, a result judging module 41, and a result storage module 42.

The audio stream acquiring module 31 mainly corresponds to the modules from the receiver 101 to the audio/video separating module 108. The audio decoder 32 corresponds to the audio decoding module 109. The audio data accumulating module 34 corresponds to the resampling module 111.

The song name search commanding module 36 corresponds to the user input processing module 120. The audio cutting processing module 37 and the feature quantity generator 38 correspond to the silent section judging module 112 and the feature quantity calculating module 113, respectively. The result judging module 41 and the result storage module 42 correspond to the information controller 114.

The audio stream acquiring module 31 acquires a reproduction subject audio stream and supplies it to the audio decoder 32. The audio decoder 32 decodes the received audio stream and outputs PCM data, which is passed to the audio data accumulating module 34. The audio data accumulating module 34 performs resampling on the received PCM data if it is necessary for processing load reduction or some other purpose, and resulting data is stored in a ring buffer provided in the audio data accumulating module 34 for the purpose of referencing at the time of a song name search.

The process of Fig. 4 will be described below. At step S41, a user makes an instruction to start a song name search using the remote controller (instructing means). The search start instruction of the user is sent to the song name search commanding module 36 of the digital TV recording/reproducing apparatus 10. The remote controller may be equipped with a button that is dedicated to this purpose. Alternatively, the digital TV recording/reproducing apparatus 10 may be configured so that a user can make a search start instruction in an interactive manner using a certain button while looking at a menu that is displayed on the TV screen.

When the song name search start instruction is sent to the song name search commanding module 36, at step S42 the song name search commanding module 36 performs processing that is necessary for a song name search and the audio cutting processing module 37 supplies an audio data acquisition instruction to the audio stream decoding module 30, whereupon audio cutting processing is started. For example, the processing that is necessary for the song name search is activation of application software for transmission of feature quantities to an external server 3. In connection with this processing, in many cases, various kinds of initialization processing and license authentication processing are performed. The audio cutting processing module 37 acquires, from the audio data accumulating module 34, PCM data having a prescribed length which is necessary for the song name search.

In the audio stream decoding module 30, the audio stream acquiring module 31 acquires an audio stream in a target section and supplies it to the audio decoder 32. The audio decoder 32 decodes the audio stream. The audio data accumulating module 34 accumulates decoded data and passes cut-out data to the audio cutting processing module 37.

The audio cutting processing module 37 passes the received audio data to the feature quantity generator 38. The feature quantity generator 38 generates feature quantities that are necessary for a song name search, and sends the generated feature quantities to an external server 3 over the network, as a transmitting module.

More specifically, upon completion of acquisition of PCM data having the prescribed length, at step S43 the feature quantity generator 38 generates information that is necessary for a song name search, that is, feature quantities that are necessary to cause the external server 3 to perform a song name search (e.g., magnitude judgment information for each frequency of the PCM data). Upon completion of generation of necessary information, at step S44 the feature quantity generator 38 sends the necessary data (information) to an external server 3.

At step S45, the external server 3 searches for song name data that conforms to the received feature quantities. Upon completion of the search, the external server 3 sends a search result to the digital TV recording/reproducing apparatus 10. The search result is received by the result acquiring module 40 (step S46). Song name information which is a character string or the like (it is preferable that the song name information include, in addition to a song name, pieces of accompanying information such as an artist name, a composer name, a lyricist name, an album title, and a label name) is passed to the result judging module 41. If no song name information is acquired, a character string such as "no query" is passed to the result judging module 41. If song name information is acquired, the result judging module 41 generates a result character string for user notification passes it to the result storage module 42 if the received information is effective song name data.

If no song name information is acquired, if necessary, the result judging module 41 gives a re-search request to the song name search commanding module 36 (i.e., the process returns to step S42 if such a user setting exists).

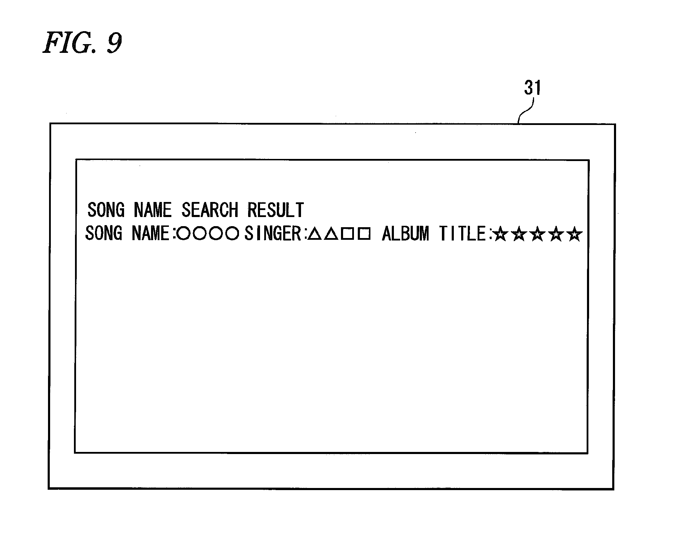

If song name information is acquired and the search result should be displayed, the song name information is displayed on the digital TV recording/reproducing apparatus 10 according to the source of the search request (see Fig. 9). At step S48, the song name information is stored in the result storage module 42. The process is finished at step S49.

Fig. 9 shows an example display in which a song name, an artist name, a composer name, etc. are displayed on part (in the example of Fig. 9, a top portion) of the display screen of the display module 31 which is a front portion of the digital TV recording/reproducing apparatus 10.

### <Audio stream analysis flow>

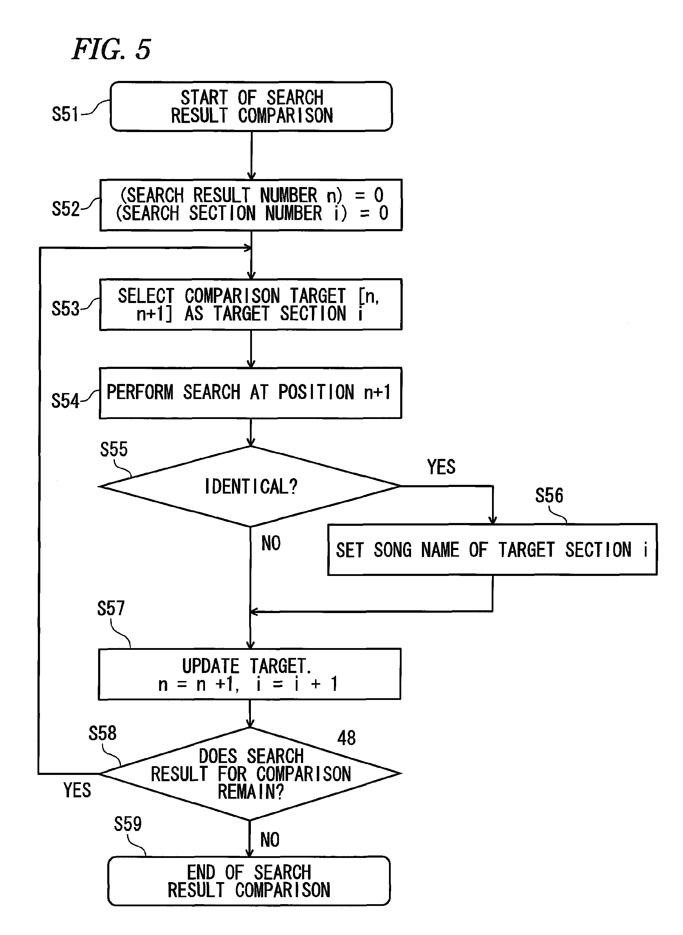

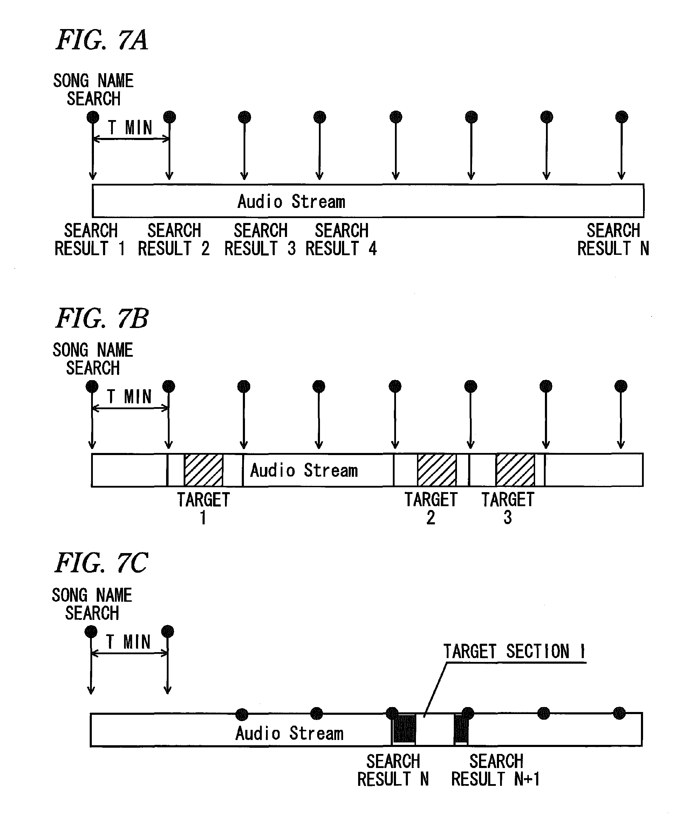

As shown in Figs. 7A-7C, an audio stream analysis is performed every predetermine time (T min). An audio stream analyzing process shown in Fig. 5 is executed as search results 1, 2, ···, N are acquired at respective search positions that are arranged in order from the left end of the stream (see Fig. 7A).

Each adjoining pair of search results among the search results 1, 2, ···, N are compared with each other. If search results are the same, it is judged that data of the same musical piece exists in the section between the adjoining search positions, described below (see Fig. 7B).

Upon completion of searches of a subject audio stream (performed at a predetermined interval of T min), comparison between the search results is started at step S51. The search results are compared with each other from the left end (earliest position) of the stream. At step S52, the search result number n is set to "1" and the search section number i of the search section between two search results (see Fig. 7C) is set to "0."

A comparison target [n, n+1] is selected at step S53. At step S54, a search is performed at the position n+1 (searches are performed at the positions 0 and 1 when step S54 is executed for the first time). At step S55, a search result n and a right adjacent search result n+1 are compared with each other. If the two search results n and n+1 are identical, the song name of the section i is determined at step S56.

If the two search results n and n+1 are not identical, it means that a song break (in most cases, a break between different songs) exists in the section i. In this case, the process moves step S57 without determination of a song name.

Steps S53-S57 are executed for all sections while whether a search result for comparison remains or not is judged at step S58. The process is finished at step S59 when all the sections have been processed.

### <Method for determining a search target section>

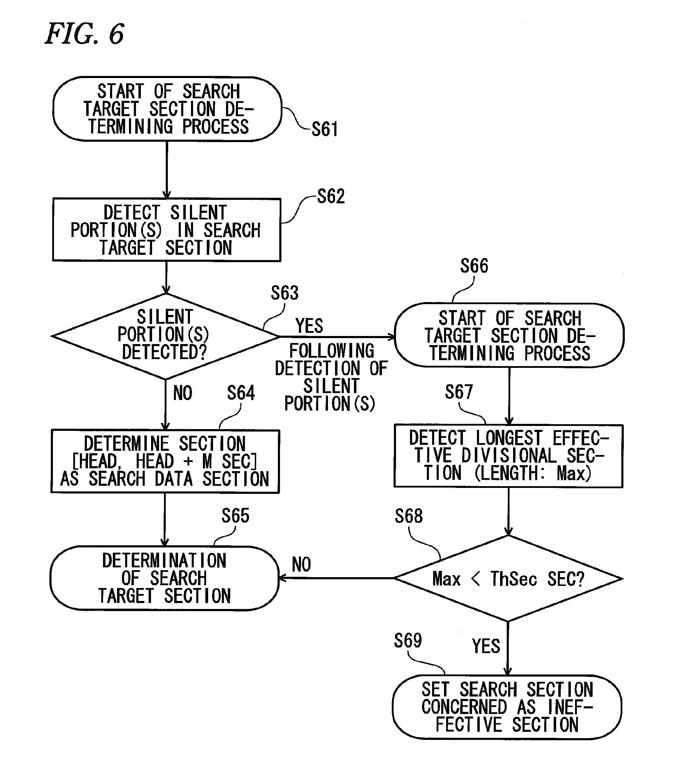

Fig. 6 is a flowchart of search target section determining process according to the embodiment including an audio data cutting-out process which is executed at the time of detection of a silent portion(s).

An audio stream analysis is performed every preset time (T min) from the head of a stream. First, positions that are arranged at intervals of T min from the left end of the stream are employed as search initial positions. In song name searches, the state of audio data that is used for a search has a great influence on a search result (a search tends to fail if a data portion corresponding to a musical piece is short).

In view of the above, upon a start (step S61) of a process for determining an analysis target section, at step S62 (quasi-)silent portions (ineffective portions for song name search which are not complete silent portions but are low in reproduction volume level) is detected.

If a silent portion(s) is found in a search section (S63: yes), the search positions are corrected at step S66. If no silent portion is found in the search section (S63: no), at step S64 a section [head, head + M sec] is determined as a search target section, the head being the search initial position. The search target section determining process is finished at step S65.

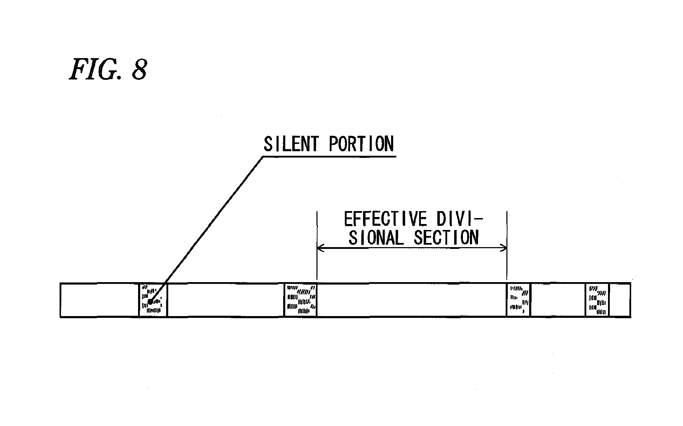

A search position correcting process which is executed when a silent portion(s) is detected is started at step S66. At step S67, the search section is divided by the silent portion(s) as shown in Fig. 8. A longest one of effective divisional sections is detected.

If the detected longest effective divisional section is shorter than ThSec sec (e.g., which is set at 15 sec in Japan taking CM lengths into consideration) (S68: yes), at step S69 the search section concerned is set as an ineffective section and will not be used for a search.

If the detected longest effective divisional section is longer than ThSec sec (S68: no), it is determined as a search target section at step S65. Then, as described above, search results 1, 2, ···, N are acquired at respective search positions that are arranged in order from the left end of the stream and are subjected to the audio stream analysis process of Fig. 5.

For a section in which a song name has not been determined by song name searches performed at the interval of T min, searches are made in the same manner at a predetermined interval Tr min (Tr < T). This song name search in the song name undetermined section is performed repeatedly until the length of the section becomes equal to a prescribed minimum length Nmin. The search is stopped when the minimum length Nmin is reached.

Example methods for determining the search interval T are as follows:

### (1) Program information is acquired from an EPG.

Values are determined in advance for respective program types. Program information is acquired from an EPG when a content is recorded. For example, in the case of music programs, each song lasts for about three minutes and hence the search interval T is set shorter than three minutes.

### (2) A user-set value is used.

A time interval that was set in advance by a user is used. For example, music ranking programs may be such that new songs are played for several minutes whereas old songs are introduced in several seconds. The length of a musical piece to be detected is determined by a user. Searches are made at an interval that is shorter than the user-set length.

Although in the above description the module of the search interval T is minute, it may be second.

A modification is possible in which song name searches are made during recording. For example, song name searches are made at an interval of T sec for a stream being recorded by a recorder. The remaining processing is performed off-line after completion of the recording.

In the embodiment, initial search positions are determined so as to have a preset interval and (quasi-)silent portions are detected using each initial search position as a reference position. A song name search target section is determined how silent portions are detected. The embodiment is advantageous over prior art techniques in that the audio data analyzing process is simple.

As described above, the embodiment makes it possible to detect a music playing state of a recorded content by performing a song name search on an audio stream of the recorded content. It is noted that if this function is performed in a content server, a user can save time and labor of making a search by himself or herself.

The invention is not limited to the above embodiment and various modifications are possible without departing from the spirit and scope of the invention. And various inventive concepts may be conceived by properly combining plural constituent elements disclosed in the embodiment. For example, several ones of the constituent elements of the embodiment may be omitted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing apparatus comprising:
a signal output module configured to output an audio signal;
a commanding module configured to command a search for song name information relating to the audio signal as a search commanding according to an external manipulation;
a cutting-out module configured to cut out part of the audio signal as a search section that includes or is close to timing of the search commanding and to remove a silent portion from the search section;
a transmitting module configured to send information of the cut-out part of the audio signal in the search section without the silent portion to a server; and
a storage module configured to receive a song name information search result for the search section from the server and to store the received search result.

2. The information processing apparatus according to claim 1, further comprising;
an output module configured to output the search result.

3. The information processing apparatus according to claim 1,
wherein the information of the cut-out part of the audio signal in the search section is feature quantities that are necessary to cause the server to perform a song name information search.

4. The information processing apparatus according to claim 2,
wherein the output module is a result display for displaying the search result.

5. An information processing method comprising:
outputting an audio signal;
commanding a search for song name information relating to the audio signal as a search commanding according to an external manipulation;
cutting out part of the audio signal as a search section that includes or is close to timing of the search commanding;
removing a silent portion from the search section;
sending information of the cut-out part of the audio signal in the search section without the silent portion to a server;
receiving a song name information search result for the search section from the server; and
storing the received search result.
